# EUROPEAN PATENT SPECIFICATION

(11) **EP 2 341 569 B1**
(45) Date of publication and mention of the grant of the patent: **06.03.2013**
(21) Application number: 10175714.4
(22) Date of filing: 08.09.2010
(51) Int. Cl.: H01M 2/10

(54) **Battery Pack**
Batteriepack
Bloc-batteries

(30) Priority: 05.01.2010 US 292457 P
(43) Date of publication of application: 06.07.2011
(73) Proprietor: Samsung SDI Co., Ltd., Gyeonggi-do (KR); Robert Bosch GmbH, 70442 Stuttgart (DE)
(72) Inventor: Kim, Myung-Chul, Gyeonggi-do, (KR); Park, Shi-Dong,, Gyeonggi-do, (KR); Lee, Hyun-Ye, Gyeonggi-do, (KR); Kim, Tae-Yong,, Gyeonggi-do, (KR)
(74) Representative: Gulde Hengelhaupt Ziebig & Schneider

(56) References cited:
- WO-A1-2008/035875
- DE-A1-102006 044 173
- JP-A- 2009 238 643
- US-A- 4 339 049
- US-A1- 2008 090 137

## Description

### BACKGROUND OF THE INVENTION

### Field of the Invention

One or more embodiments of the present invention relate to a battery pack, and more particularly, to a battery pack formed by vertically or laterally stacking battery modules each including a plurality of secondary batteries.

### Description of the Related Art

As the number of gasoline vehicles has increased, the amount of vehicle exhaust emission has also increased. Vehicle exhaust emission includes large amounts of harmful substances, such as nitrogen oxide due to combustion, carbon monoxide or hydrocarbon due to imperfect combustion, and the like, and is recognized as a serious environmental pollution problem. As fossil fuels are anticipated to be exhausted in the not too distant future, development of next generation energy sources and hybrid electric vehicles have become important issues. In terms of commercializing hybrid electric vehicles, mileage of such vehicles is determined by battery performance. In general, (conventional) batteries do not have enough electrical energy for powering hybrid electric vehicles for a satisfactory period of time or mileage. If vehicles use any energy source such as gasoline, light oil, gas, or the like, the vehicles may quickly refuel at filling stations or gas charging stations. However, even when an electric charging station is available, it takes a long time to charge a hybrid electric vehicle, which is an obstacle to commercialization. Thus, with regard to hybrid electric vehicles, improving battery performance, compared to improving other technologies regarding hybrid electric vehicles, is recognized as an important goal.

For this reason, secondary batteries capable of charging and discharging have attracted much attention. Secondary batteries are widely used in high-tech electronic devices, such as cellular phones, notebook computers, camcorders, etc., and also used as vehicle batteries.

Secondary batteries include an electrode assembly and an electrolyte. An electrode assembly in a secondary battery includes a negative plate, a positive plate, and a separator. The electrolyte includes lithium ions. The negative plate and the positive plate may respectively include an electrode tab that extends away from the assembly.

The electrode assembly may be accommodated in a case, and an electrode terminal may be exposed outside of the case. The electrode tabs may extend out of the electrode assembly to be electrically connected to the electrode terminal. The case may have a cuboid, a cylindrical or quadrangle shape.

US 2008/090137 A1 discloses a battery pack comprising a plurality of stacked battery modules, wherein each battery module is formed by arranging a plurality of secondary batteries electrically connected to one another in a first direction, and each battery module comprises compression plates accommodating the plurality of secondary batteries.

WO 2008/035875 A1 discloses a battery pack comprising a plurality of stacked battery modules, wherein each battery module is formed by arranging a plurality of secondary batteries electrically connected to one another in a first direction, and each battery module comprises a housing assembly accommodating the plurality of secondary batteries, wherein at least one of the plurality of stacked battery modules comprises a plate, wherein the plate couples the housing assembly of a first battery module to the housing assembly of a second battery module.

US 4 339 049 A discloses a frame which is used for connecting adjacent containers.

### SUMMARY OF CERTAIN INVENTIVE ASPECTS

One or more embodiments of the present invention include a battery pack, and more particularly, a battery pack formed by vertically or laterally stacking battery modules each including a plurality of secondary batteries.

Additional aspects will be set forth in part in the description which follows and, in part, will be apparent from the description, or may be learned by practice of the presented embodiments.

According to one or more embodiments of the present invention, a battery pack is disclosed, the battery pack comprising a plurality of stacked battery modules, wherein each battery module is formed by arranging a plurality of secondary batteries electrically connected to one another in a first direction, and each battery module comprises a housing assembly accommodating the plurality of secondary batteries, wherein at least one of the plurality of stacked battery modules comprises at least one reinforcement plate, wherein the at least one reinforcement plate couples the housing assembly of a first battery module to the housing assembly of a second battery module, wherein each housing assembly comprises at least one of top plate, bottom plate and side plate, wherein the at least one plate extends along the first direction on a first and second side surface of the plurality of secondary batteries, wherein the at least one reinforcement plate is formed as a frame comprising four frame members, the longitudinal axes of the four frame members extending in a direction which is different from the first direction and wherein a first frame member of the frame is connected to the top plate, a second frame member of the frame is connected to the bottom plate and a third frame member of the frame and a fourth frame member of the frame are connected to side plates, wherein each of the plurality of stacked battery modules comprises at least one separate reinforcement plate.

Preferably, each of the plurality of stacked battery modules comprises a plurality of reinforcement plates.

Preferably, the top plate is disposed on the top surface of the plurality of secondary batteries along the first direction, and the bottom plate is formed below the bottom surface of the plurality of secondary batteries along the first direction.

Preferably, the longitudinal axes of the four frame members extend in a direction which is perpendicular to the first direction.

Preferably, each battery module comprises a pair of end plates disposed at the at least one end portion of the secondary batteries of the battery module which are electrically connected to one another.

Preferably, a plurality of reinforcement plates are separated from each other and the plurality of reinforcement plates are uniformly and equidistantly arranged between the at least one end portion of the secondary batteries along the first direction.

Preferably, each of the plurality of stacked battery modules comprises the same number of reinforcement plates, wherein reinforcement plates of different battery modules have the same position between the respective pair of end plates along the first direction.

Preferably, adjacent reinforcement plates are mechanically connected to each other by means of connection members or by means of a connection plate.

Preferably, the top plate comprises top plate bended portions formed on both longitudinal sides of the top plate such that the top plate bended portions protrude upwards. Preferably, the bottom plate comprises bottom plate bended portions formed on both longitudinal sides of the bottom plate such that the bottom plate bended portions protrude downwards. Preferably, each of the pair of side plates comprises side plate bended portions formed on both longitudinal sides of the side plates such that the side plate bended portions protrude away from the secondary batteries.

Preferably, the height of the top plate bended portions preferably ranges between 2% and 20% of the width of the top plate. Preferably, the height of the top plate bended portions preferably ranges between 50% and 150% of the thickness of the reinforcement plate.

Preferably, the height of the bottom plate bended portions preferably ranges between 2% and 20% of the width of the bottom plate. Preferably, the height of the bottom plate bended portions preferably ranges between 50% and 150% of the thickness of the reinforcement plate.

Preferably, at least one selected from top plate bended portions, bottom plate bended portions and side plate bended portions comprises at least one groove.

Preferably, the size of the grooves along the first direction corresponds to the width of reinforcement plates so that reinforcement plates engage into the grooves such to fix the reinforcement plates inside the respective grooves and to avoid a movement of the reinforcement plates along the first direction. Preferably, the depth of the grooves is equal to the thickness of the reinforcement plates.

Preferably, at least two battery modules are provided, each of the at least two battery modules comprising at least one reinforcement plate, the reinforcement plates being arranged adjacent to each other, wherein each of the at least two reinforcement plates is connected to a first connection member by a first connecting member on a first side surface of the secondary batteries of the respective battery module and furthermore connected to a second connection member by a second connecting member on a second side surface of the secondary batteries of the respective battery module, wherein the position of the first connecting member along a second axis which extends parallel to the longitudinal axis of the third and fourth frame members of the reinforcement plate is different from the position of the second connecting member along the second axis.

Preferably, the ratio of the number of secondary batteries to the number of reinforcement plates and is equal to or greater than 2:1.

Preferably, the ratio of the number of secondary batteries to the number of reinforcement plates ranges between 2:1 and 6:1.

According to the present invention, a battery pack is formed by vertically or laterally stacking battery modules each including a plurality of secondary batteries, thereby preventing deflection of the battery module.

### BRIEF DESCRIPTION OF THE DRAWINGS

These and/or other aspects will become apparent and more readily appreciated from the following description of the embodiments, taken in conjunction with the accompanying drawings of which:
FIG. 1 is a schematic exploded perspective view of a battery pack formed by stacking a plurality of battery modules according to an embodiment of the present invention;
FIG. 2 is a schematic perspective view of the battery pack of FIG. 1 in which the battery modules of FIG. 1 are attached to one another (by a first connection member);
FIG. 3 is an exploded perspective view of one of the battery modules of FIG. 1 according to an embodiment of the present invention;
FIG. 4 is a schematic front view of the battery modules of FIG. 2;
FIG. 5 is an exploded perspective view of a battery module according to another embodiment of the present invention;
FIG. 6 is a schematic front view of a battery pack formed by stacking the battery module of FIG. 5 a plurality of times;
FIG. 7 is a perspective view of another version of the first connection member included in the battery pack of FIG. 2;
FIG. 8 is a schematic front view of the battery pack of FIG. 7;
FIG. 9 is an exploded perspective view of a battery module according to another embodiment of the present invention;
FIG. 10 is a schematic perspective view of a side plate in which side grooves are formed, according to an embodiment of the present invention;
FIG. 11 is a schematic perspective view of the battery pack of FIG. 1 arranged a plurality of times in a plurality of rows;
FIG. 12 is a schematic front view of the battery packs of FIG. 11;
FIG. 13 is a schematic perspective view of the battery pack according to another embodiment of the present invention;
FIG. 14 is a schematic perspective view of the battery pack according to another embodiment of the present invention; and
FIG. 15 is a schematic perspective view of another version of the battery pack of FIG. 14.

### DETAILED DESCRIPTION

Reference will now be made in detail to embodiments, examples of which are illustrated in the accompanying drawings.

A battery pack 300 according to an embodiment of the present invention may be formed by stacking a plurality of battery modules 1, 100, 200 vertically and/or laterally. Each of the battery modules 1, 100, 200 may be formed by stacking a plurality of secondary batteries 10, 110, 210 vertically and/or laterally. The battery modules 1, 100 , 200 may deflect due to the weight of the plurality of secondary batteries 10, 110, 210. Also, the battery modules 1, 100, 200 may vibrate due to the deflection.

First of all, a battery pack 300 will be described. The battery pack 300 may include a plurality of battery modules 1. Each of the battery modules 1 may be formed by arranging a plurality of secondary batteries 10 in a predetermined direction and electrically connecting the secondary batteries 10 to each other. Each of the secondary batteries 10 may be a lithium secondary battery. For example, each battery module 1 may include twelve secondary batteries 10, and the battery pack 300 may include eight battery modules 1 stacked in four layers. However, the numbers of secondary batteries 10 and battery modules 1 are not limited thereto, and one of ordinary skill in the art would understand that various other configurations are possible. When the plurality of battery modules 1 are stacked to form the battery pack 300, the battery modules 1 are connected to one another to increase structural stability of the battery pack 300.

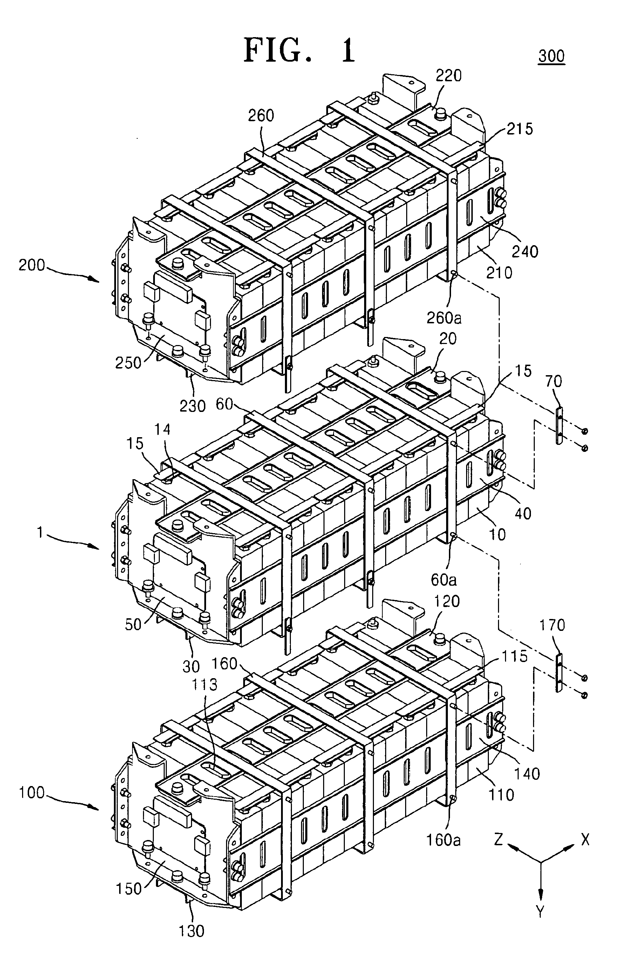

Accordingly, the battery pack 300 includes reinforcement plates 60, 160, and 260 for increasing structural coherence among the battery modules 1 will now be described with reference to FIGS. 1 through 4.

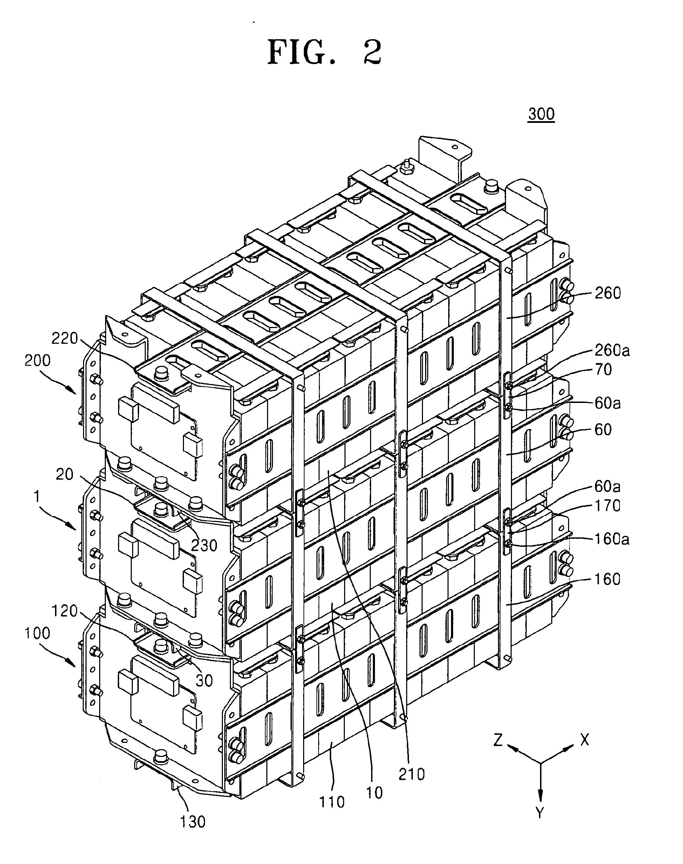

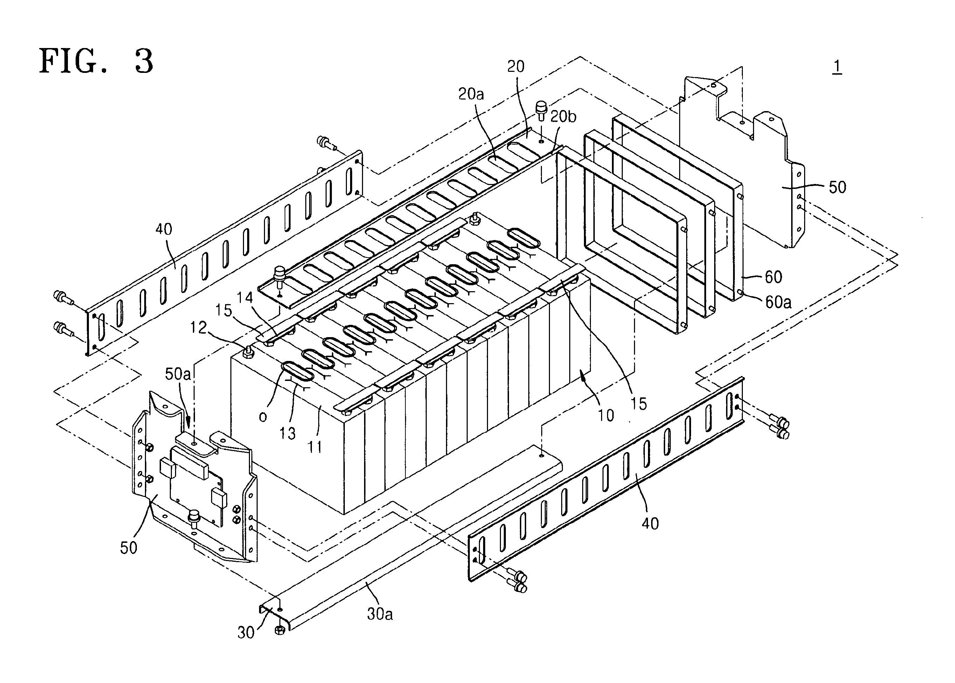

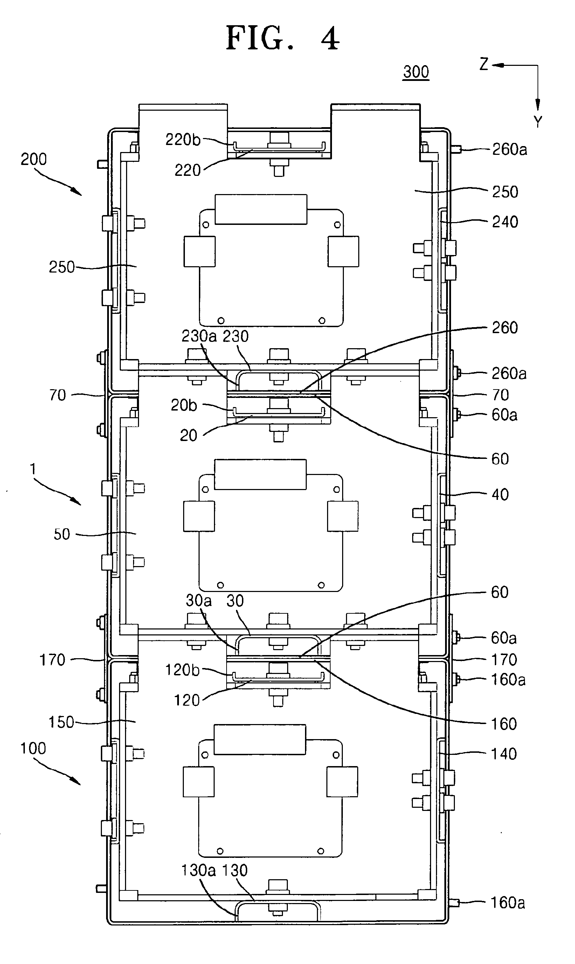

FIG. 1 is a schematic exploded perspective view of the battery pack 300 formed by stacking the battery module 1, a battery module 100, and a battery module 200, wherein descriptions of the features of the battery module 1 may be analogously applied to the battery modules 100 and 200, according to an embodiment of the present invention. FIG. 2 is a schematic perspective view of the battery pack 300 of FIG. 1 including the battery modules 1, 100, and 200 attached to one another. FIG. 3 is an exploded perspective view of the battery module 1 according to an embodiment of the present invention. FIG. 4 is a schematic front view of the battery modules 1, 100, and 200 of FIG. 2.

The battery pack 300 is formed by stacking the battery modules 1, 100, and 200. Referring to FIG. 3, the battery module 1 includes a plurality of the secondary batteries 10, a top plate 20, a bottom plate 30, side plates 40, and end plates 50.

Referring to exemplary one of the secondary batteries 10 in the battery module 1, the secondary battery 10 includes an electrode assembly (not shown), a case 11 (preferably having a cuboid shape), and electrode terminals 12. The electrode assembly includes a negative plate (not shown), a separator (not shown), and a positive plate (not shown), and may be a winding type or a stack type assembly. The case 11 accommodates the electrode assembly. The electrode terminals 12 may protrude from the case 11 and electrically connect the secondary battery 10 with an external device. The case 11 may include a vent 13. The secondary battery 10 may be perforated so as to rupture at a predetermined internal pressure. Accordingly, the vent 13 may be formed relatively weakly so that gas generated in the case 11 may be emitted through the perforated vent 13. A cap plate (not shown) may be coupled with an opening of the case 11. The cap plate may be a thin plate. The cap plate may include an electrolyte inlet through which an electrolyte is injected. After the electrolyte is injected through the electrolyte inlet, the electrolyte inlet may be sealed with a sealing cover (not shown).

The secondary batteries 10 (of the battery module 1 of FIG. 3) may be arranged facing one another in a predetermined direction. The secondary batteries 10 may be electrically connected in parallel, in series, or in a series and parallel combination. To connect the secondary batteries 10 in parallel or series, negative plates and positive plates of the secondary batteries 10 may be alternately arranged. The electrode terminals 12 of the secondary batteries 10 may be connected to each other by a bus bar 14.

As illustrated in FIG. 1, the secondary batteries 10 may be general quadrangle (preferably cuboid shaped) secondary batteries. However, the present invention is not limited thereto, and the secondary batteries 10 may be any of various battery cells, such as circular secondary batteries or pouch-type secondary batteries. A connection structure and the number of stacked secondary batteries 10 may be determined in consideration of charging and discharging capacities required when the battery pack 300 is designed.

Referring again to one secondary battery 10 of the battery module 1, the electrode assembly of the secondary battery 10, which may contain lithium, expands or contracts due to charging or discharging. The expansion or contraction of the electrode assembly exerts a physical force on the case 11, and thus the case 11 expands or contracts according to the expansion or contraction of the electrode assembly. The spatial changes of the case 11 may be permanent by repeated expansions and contractions, and the expansion increases the electrical resistance, thereby decreasing efficiency of the secondary battery 10. Accordingly, with respect to the battery module 1, the one pair of end plates 50 thereof may be arranged in a predetermined direction to be respectively disposed at both end portions of the secondary batteries 10 which are electrically connected to one another. The side plate 40 is connected to a side portion of the end plates 50 to compress and fix the secondary batteries 10 so that expansion or contraction in a lengthwise direction of the secondary batteries 10 may be (at least partially) prevented.

The top plate 20 is disposed on the plurality of secondary batteries 10 and connected to an upper portion of the end plates 50. Openings 20a formed in the top plate 20 are respectively disposed to correspond to the vents 13 of the secondary batteries 10. The top plate 20 may include top plate bended portions 20b formed on both longitudinal sides of the top plate 20 in such a way that the top plate bended portions 20b protrude upwards and the top plate 20 has a U shape. Each of the openings 20a formed in the top plate 20 may include a sealing ring O between the top plate 20 and the corresponding vent 13, so that when gas is emitted from one of the vents 13, the gas does not affect a secondary battery adjacent thereto and is emitted through the corresponding opening 20a. The sealing ring O may be an O-shaped ring. A groove 50a is formed in an upper center portion of the end plates 50 to accommodate the top plate 20. The openings 20a of the top plate 20 may be disposed in close proximity to the secondary batteries 10.

With reference to the battery module 1, the bottom plate 30 is disposed under the secondary batteries 10 to support the weight of the plurality of secondary batteries 10, and is connected to a lower portion of the end plates 50. In order to withstand the weight of the secondary batteries 10, the bottom plate 30 may include bottom plate bended portions 30a. The bottom plate bended portions 30a may be formed on both longitudinal sides of the bottom plate 30 in such ways that the bottom plate bended portions 30a protrude downwards.

The battery module 1 may be coupled to and supported by an adjacent battery module via the end plates 50, and thus the battery pack 300 may be formed by vertically and/or laterally stacking, for example, the battery modules 1, 100, and 200.

The reinforcement plates 60 structurally may connect the battery module 1 to another battery module. The reinforcement plates 60 may have various shapes, for example, a rectangular shape (or frame shape) to surround the battery module 1, as illustrated in FIG. 3. The electrode terminals 12 of the secondary batteries 10 of the battery module 1 are covered with an electrode terminal cover 15 so that the reinforcement plates 60 do not contact the electrode terminals 12, thereby preventing a short-circuit. In FIG. 3, the reinforcement plates 60 may support the battery module 1 by surrounding the top plate 20, the side plates 40, and the bottom plate 30. The reinforcement plates 60 included in the battery module 1 are connected with the reinforcement plates 160 and 260 of the adjacent battery modules 100 and 200 to maintain the structures of the stacked battery modules 1, 100, and 200. In FIGS. 1 through 3, the battery modules 1, 100, and 200 include the reinforcement plates 60, 160, and 260, respectively. However, the numbers of reinforcement plates 60, 160, and 260 that may be disposed respectively in each of the battery modules 1, 100, and 200 are not limited to as illustrated, and different numbers of reinforcement plates 60, 160, and 260 may be disposed.

The reinforcement plates 60, 160, and 260 will now be described with reference to FIGS. 1, 2 and 4. The battery pack 300 may be formed by stacking the battery modules 1, 100, and 200. The stackable number of battery modules 1, 100, and 200 is not limited to as illustrated. However, for convenience of description, in FIG. 1, the battery modules 1, 100, and 200 are stacked in a triple-layered structure. Referring to FIG. 1, 2 and 4, a battery module disposed under the battery module 1 may be the second battery module 100 on the basis of the battery module 1 which may be identical to the battery module 1 already described. A battery module disposed above the battery module 1 may be the third battery module 200 which may be identical to the battery module 1 already described. In order to clarify location relations among the battery modules 1, 100, and 200, each battery module may be respectively referred to as the first battery module 1, the second battery module 100, and the third battery module 200, but components of the first, second, and third battery modules 1,100, and 200 may be identical (or at least similar). The reinforcement plates 60 of the first battery module 1 may include connecting members 60a to be easily connected to the reinforcement plates 160 and 260 of the second and third battery modules 100 and 200, which are adjacent to the first battery module 1. That is, the reinforcement plates 160 and 260 of the second and third battery modules 100 and 200, which are adjacent to the reinforcement plate 60 of the first battery module 1, may be screw-coupled to the reinforcement plate 60 of the first battery module 1 via first connection members 70 and 170 through the connecting members 60a, connecting members 160a, and connecting members 260a. The connecting members 60a, 160a, and 260a and the first connection members 70 and 170 may be screw-coupled with one another. However, the coupling among the reinforcement plates 60, 160, and 260 is not limited to screw-coupling, and any of various coupling methods, for example, welding, may be possible. As such, the second battery module 100 and the third battery module 200 adjacent to the first battery module 1 are coupled through the first connection members 70 and 170, and thus the entire stability of the battery pack 300 may be increased. Also, the reinforcement plates 60, 160, and 260 are structurally connected to not only the bottom plate 30, a bottom plate 130, and a bottom plate 230, but also the top plate 20, a top plate 120, and a top plate 220, and the side plate 40, a side plate 140 and a side plate 240. Accordingly, the reinforcement plates 60, 160, and 260 structurally disperse loads of the secondary batteries 10, 110 and 210 to prevent deflection of the battery modules 1, 100, and 200.

The top plate bended portions 20b, 120b, 220b or/and the bottom plate bended portion 30a, 130a, 230a of the bottom plates 30, 130, and 230 may be formed to have heights less than a predetermined value. Referring to FIG. 4, when the top plate bended portions 20b, 120b, and 220b of the top plates 20, 120, and 220 and the bottom plate bended portion 30a, 130a, 230a of the bottom plates 30, 130, and 230 face and contact one another, the reinforcement plates 60, 160, and 260 are difficult to be formed above the top plates 20, 120, and 220 or under the bottom plates 30, 130, and 230. Accordingly, the top plate bended portions 20b, 120b, and 220b of the top plates 20, 120, and 220 are formed to have heights less than a predetermined value, so that the reinforcement plates 60, 160, and 260 may be formed above the top plates 20, 120, and 220. Also, the bottom plate bended portions 30a, 130a, and 230a of the bottom plates 30, 130, and 230 are formed to have heights less than a predetermined value, so that the reinforcement plates 60, 160, and 260 may be formed under the bottom plates 30, 130, and 230. In this instance, any one between the top plate bended portions 20b, 120b, and 220b and the bottom plate bended portions 30a, 130a, and 230a may be formed to have heights less than a predetermined value, or both of them may be formed to have heights less than a predetermined value.

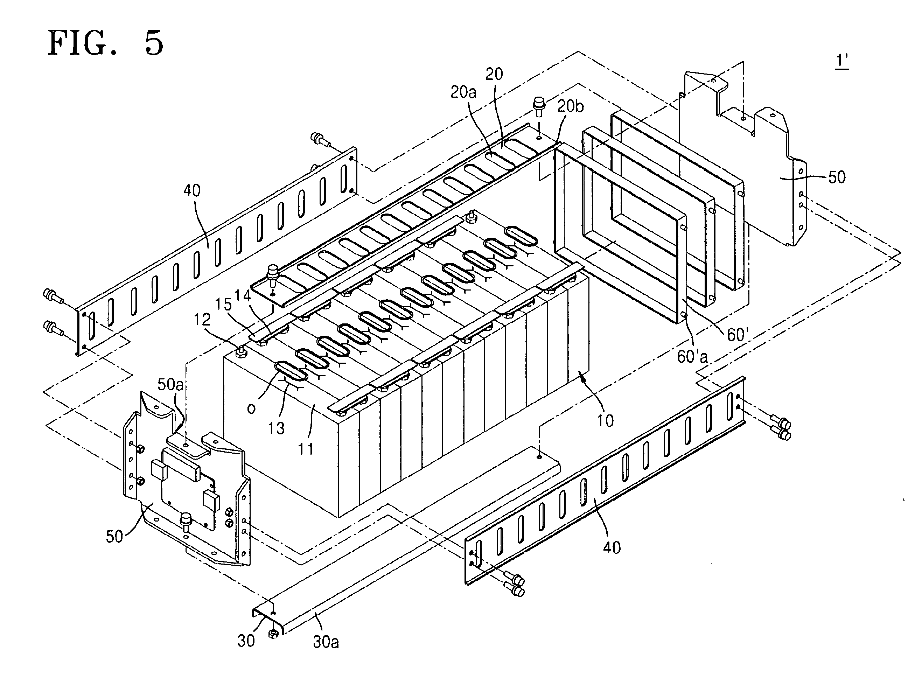

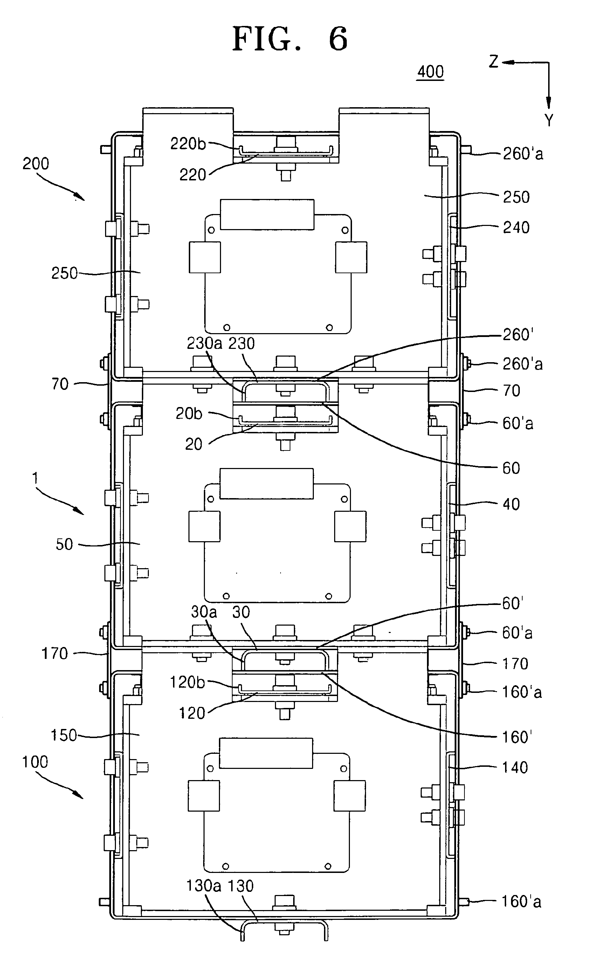

In this instance, it is not necessary for the reinforcement plates 60 to completely surround the entire battery module 1, that is, the battery module 1 including the top plate 20, the bottom plate 30, and the side plates 40, as illustrated in FIGS. 1 through 4. For example, referring to FIG. 5 and 6, the reinforcement plates 60 may be formed so as to pass through between the secondary battery 10 and its respective (associated) bottom plate 30.

FIG. 5 is an exploded perspective view of a battery module 1'according to another embodiment of the present invention. FIG. 6 is a schematic front view of a battery pack 400 formed by stacking the battery module 1' of FIG. 5 a plurality of times. The reinforcement plates 60 may be disposed between the bottom plate 30 and its respective (associated) secondary batteries 10. As such, when the reinforcement plates 60 are disposed between the bottom plate 30 and the secondary batteries 10, it is not necessary for the reinforcement plates 60 to be formed such to extend below the bottom plate 30. Although not shown in the drawing, in a further preferred embodiment of the invention, the reinforcement plates 60 may pass through between the top plate 20 and its respective (associated) the secondary batteries 10 and between the bottom plate 30 and its respective (associated) secondary batteries 10. When the reinforcement plates 60 are disposed as described above, coupling between the bottom plate 30 of the first battery module 1' and the top plate 120 of the second battery module 100 may not be hindered. Therefore, the reinforcement plates 60 are not limited to being disposed to completely surround all of the top plate 20, the bottom plate 30, and the side plate 40, and may be disposed in the inner part of any one selected from the top plate 20, the bottom plate 30, and the side plate(s) 40 and combinations thereof.

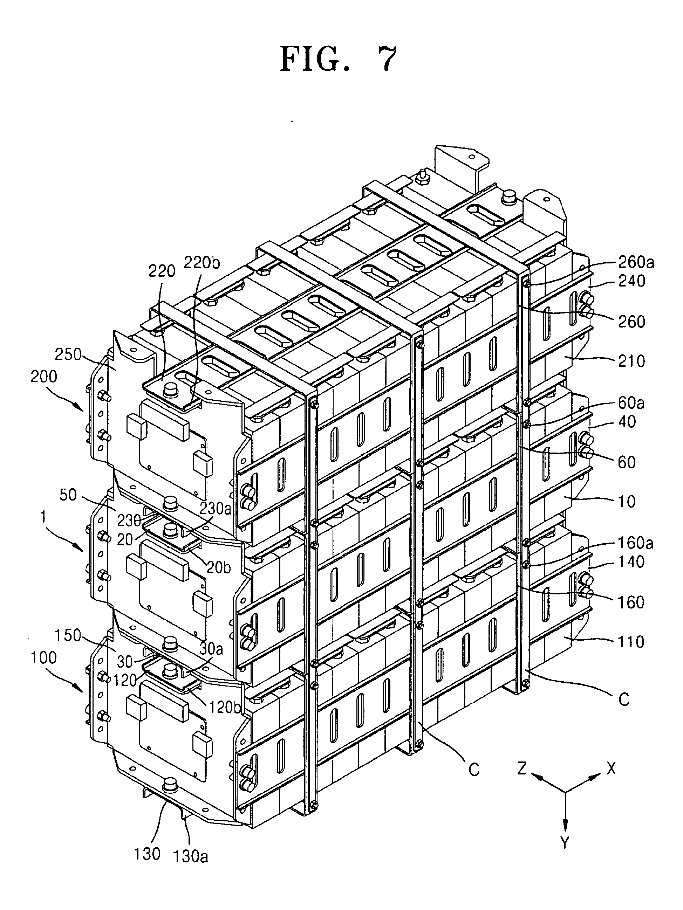

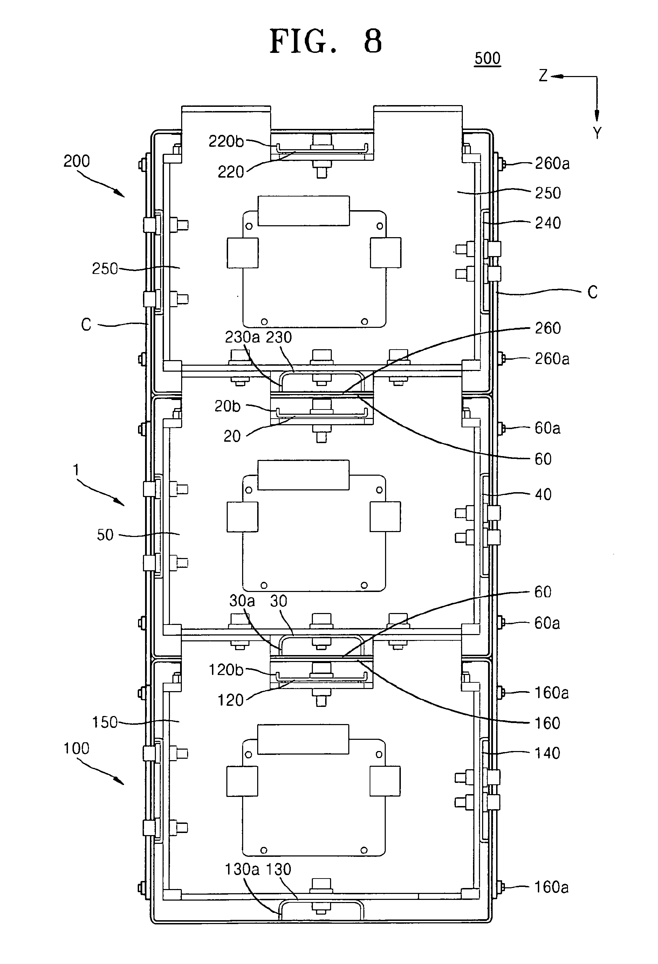

Also, the reinforcement plates 60, 160, and 260 may be coupled to one another using various coupling methods. For example, referring to FIG. 7 or 8, the reinforcement plates 60, 160, and 260 respectively disposed in the battery modules 1, 100, and 200 may be coupled to a connecting plate C to maintain each structure of the battery modules 1, 100, and 200. The connecting plate C may be formed of an integral plate. Accordingly, when a single connecting plate C (i.e. only one connecting plate C for the vertical or lateral connection of the battery modules of one battery pack) is used, a structural stability of the battery pack may be increased, compared to when a plurality of first connection members 70, 170, and 270 are used. The reinforcement plates 60, 160, and 260 and the connecting plate C may be coupled through screw-coupling between the connecting members 60a, 160a, and 260a of the reinforcement plates 60, 160, and 260 and the connecting plate C or through welding between the reinforcement plates 60, 160, and 260 and the connecting plate C.

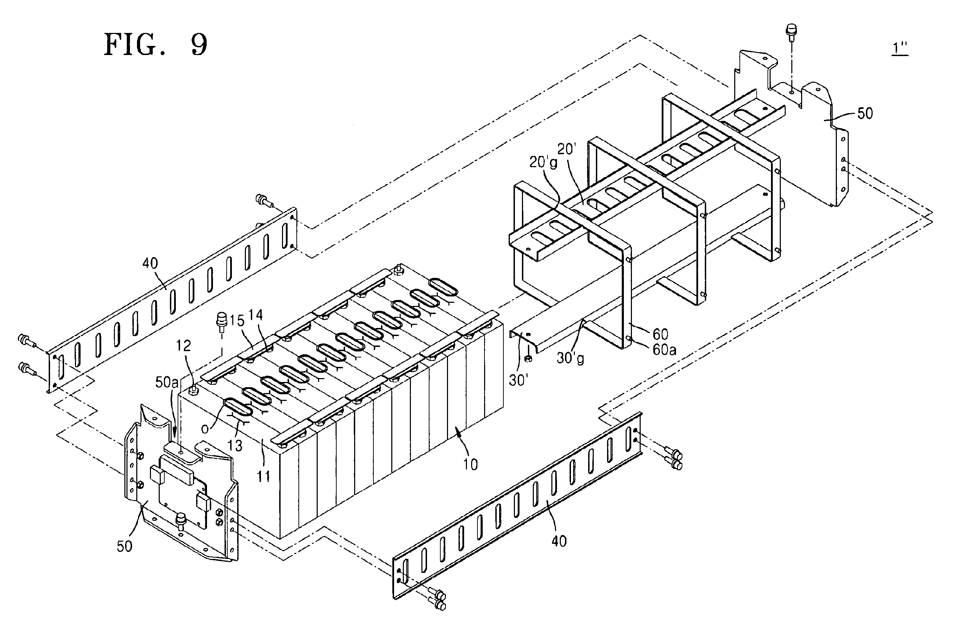

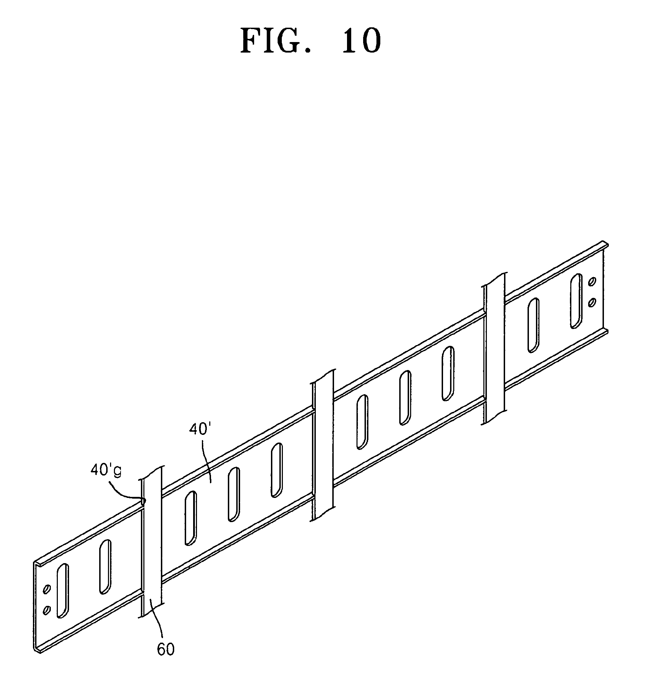

In this instance, in order to facilitate coupling of the reinforcement plates 60, 160, and 260 and the connecting plate C, the components of battery modules 1, 100, and 200 may include grooves for minimizing spaces required for the reinforcement plates 60, 160, and 260, which will be described with reference to FIG. 9 or 10.

FIG. 9 is an exploded perspective view of a battery module 1" according to another embodiment of the present invention. FIG. 10 is a schematic perspective view of a side plate 40'in which side grooves 40'g are formed, according to an embodiment of the present invention.

Referring to FIG. 9, an upper groove 20'g may be formed in a top plate 20' corresponding to the reinforcement plates 60. The reinforcement plates 60 are prevented from moving due to the upper groove 20'g formed in the top plate 20', and enter into the upper groove 20'g according to the depth of the upper groove 20'g, and thus the space required for the reinforcement plate 60 may be reduced. Alternatively, reinforcement plate 60 may be prevented from moving by a lower groove 30'g formed in a bottom plate 30', and enter into the lower groove 30'g, and thus the space required for the reinforcement plates 60 may be reduced. In this instance, a groove may be formed in at least one of the top plate 20' or the bottom plate 30', but the location where the groove may be formed is not limited thereto. For example, referring to FIG. 10, a side groove 40'g may be in a side plate 40'. In this instance, the reinforcement plates 60 enter into the side groove 40'g according to the depth of the side groove 40'g, and thus the space required for the reinforcement plates 60 may be reduced. The reinforcement plates 60 may be prevented from moving by being coupled with at least one of the upper groove 20'g, the lower groove 30'g, or the side groove 40'g, and thus the space required for the reinforcement plates 60 is minimized so that the reinforcement plates 60 do not hinder structural degrees of freedom of other components. According to the present invention, grooves may be disposed in any one selected from the top plate 20, the bottom plate 30, and the side plate(s) 40 and combinations thereof.

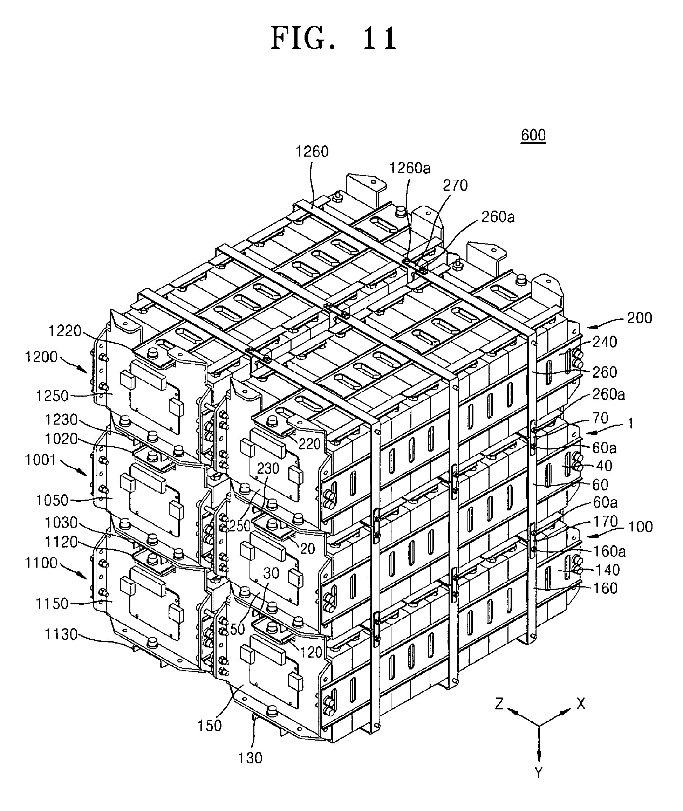

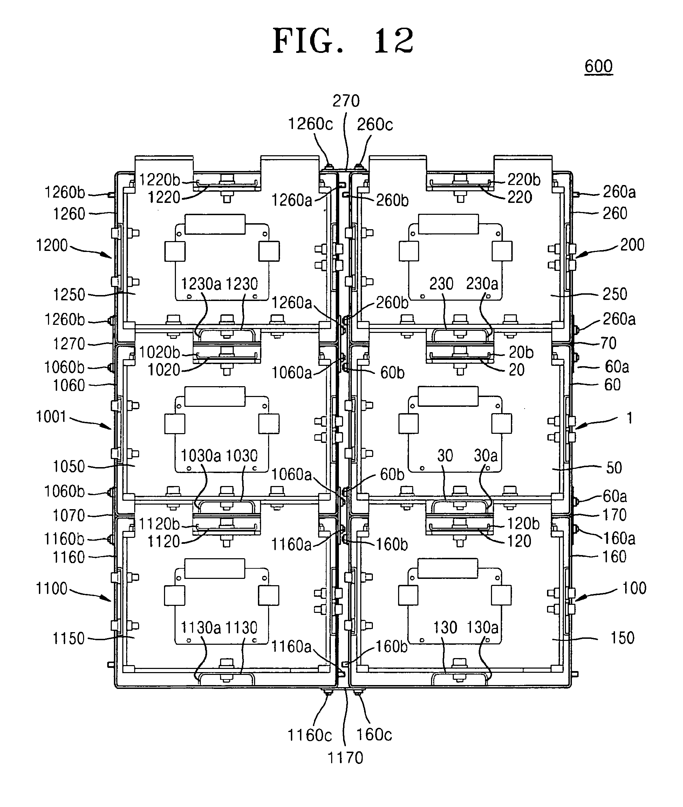

The stacking method of the battery modules 1, 100, and 200 and battery modules 1001, 1100, and 1200 is not limited thereto, and various methods may be used. Also, adjacent ones of the reinforcement plates 60, 160, and 260 and reinforcement plates 1060, 1160, and 1260 may be coupled with one another. For example, referring to FIGS. 11 and 12, the battery modules 1, 100, 200, 1001, 1100, and 1200 may be stacked in a plurality of rows.

FIG. 11 is a schematic perspective view of the battery pack of FIG. 1 arranged a plurality of times in a plurality of rows. FIG. 12 is a schematic front view of the battery packs of FIG. 11.

Each of the reinforcement plates 60, 160, 260, 1060, 1160, and 1260 of the battery modules 1, 100, 200, 1001, 1100, and 1200 may be screw-coupled to adjacent reinforcement plates through the first connection members 70, 170, 270, 1070, 1170 and 1270.

Hereinafter, for convenience of description, each battery module will be referred to as the first battery module 1, the second battery module 100, the third battery module 200, a fourth battery module 1001, a fifth battery module 1100, and a sixth battery module 1200. The first connecting members 60a and second connecting members 60b of the first battery module 1 may not be disposed symmetrically with respect to each other based on the centers of the end plates 50, i.e. the vertical position of the first connecting members 60a in Fig. 12 is different from the vertical position of the associated first connecting members 60b of the battery module 1. Since the first connecting members 60a and the second connecting members 60b are not disposed symmetrically with respect to each other, when the first battery module 1 is disposed adjacent to the fourth battery module 1001, the connecting members do not hinder one another, thereby minimizing the volume required. That is, referring to FIG. 12, the second connecting members 60b of the first battery module 1 and first connecting members 1060a of the fourth battery module 1001 are disposed asymmetrically with respect to each other. Accordingly, the second connecting members 60b and the first connecting members 1060a do not hinder each other, and thus the first battery module 1 and the fourth battery module 1001 may be disposed more close (adjacent) to each other.

The reinforcement plates 60, 160, 260, 1060, 1160, and 1260 may be coupled not only vertically but also laterally. For example, the sixth battery module 1200 and the third battery module 200 are adjacent to each other and may be coupled to each other through a first connection member 270. The reinforcement plates 260 and 1260, which are respectively disposed in the uppermost part of the third and sixth battery modules 200 and 1200, may respectively include third connecting members 260c and 1260c. The second battery module 100 and the fifth battery module 1100, which are respectively disposed in the lowermost part of the second and fifth battery modules 100 and 1100, may be coupled to each other. For example, a third connecting member 160c formed in the second battery module 100 and a third connecting member 1160c formed in the fifth battery module 1100 may be mechanically coupled to each other through the first connection member 1170.

As such, the reinforcement plates 60, 160, 260, 1060, 1160, and 1260 may be not only vertically coupled to one another but also mechanically coupled to adjacent reinforcement plates. The coupling method is not limited to the screw-coupling as illustrated in FIG. 11 or 12. For example, the reinforcement plates 60, 160, 260, 1060, 1160, and 1260 may be coupled to one another through welding. Also, the coupling method is not limited to the coupling through the first connection members 70, 170, 270, 1070, 1170, and 1270. For example, as illustrated in FIG. 7 or 8, the battery modules 1, 100, 200, 1001, 1100, and 1200 disposed vertically may be coupled to one another through the integral connecting plate C, and also may be coupled by welding through the connecting plate C.

Although not shown in the drawing, the single connecting plate C may (preferably completely) surround the plurality of battery modules 1, 100, 200, 1001, 1100, and 1200 and may couple them to one another through a screw-coupling method.

The battery pack 300 including the plurality of battery modules 1, 200, and 300 may be used in electric vehicles. If the battery pack 300 including the secondary battery 10 emits poisonous gas due to an explosion or other reasons, the poisonous gas is explosively emitted in a short period of time. When the poisonous gas is flowed into the vehicles, the gas affects the human body. In this instance, the battery pack 300 may be accommodated in a sealing case, and the sealing case may be externally connected. In order to avoid this risk, the battery pack 300 may have a structure for reducing vibration. In the battery pack 300 according to an embodiment of the present invention, the reinforcement plates 60 supports parts where deflection is generated in the battery module 1, thereby reducing deflection and vibration of the battery module 1.

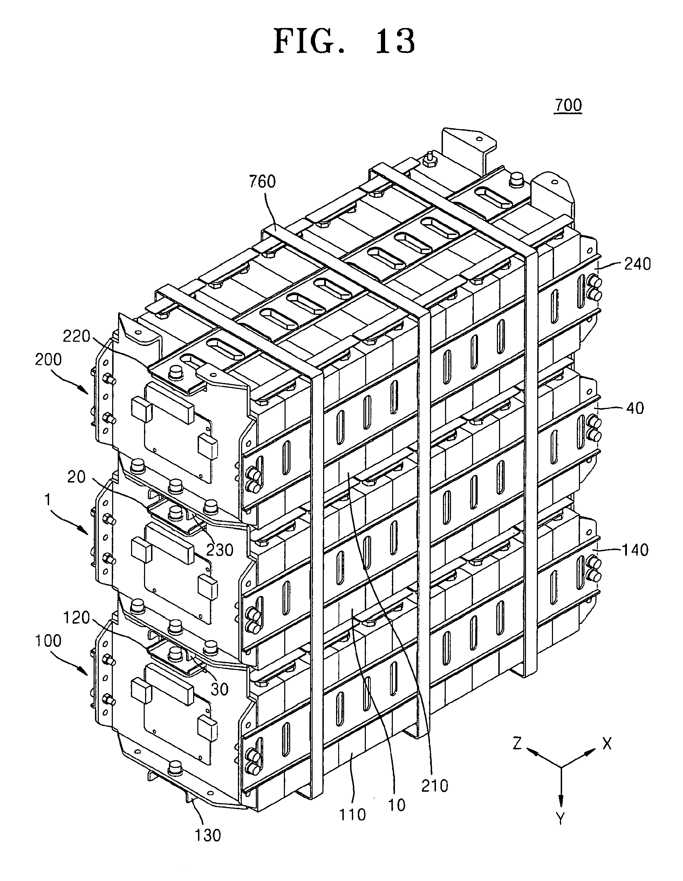

Referring to FIGS. 13-15, various embodiments of the present invention will be described. Referring to FIG. 13, a battery pack 700 may include a plurality of stacked battery modules 1, 100, and 200. At least one of the pluralities of stacked battery modules 1, 100, and 200 may include at least one reinforcement plate 760. The reinforcement plate 760 may encompass pluralities of the battery modules 1, 100, and 200. For example, as illustrated in FIG. 13, a single reinforcement plate 760 may surround three battery modules 1, 100, and 200. Of course, the current embodiment of the present invention is not limited thereto. For instance, even though not illustrated, a first reinforcement plate may surround the first and second battery modules 1 and 100, and a second reinforcement plate may surround the third battery module 200. Connection members may couple the first and second reinforcement plates.

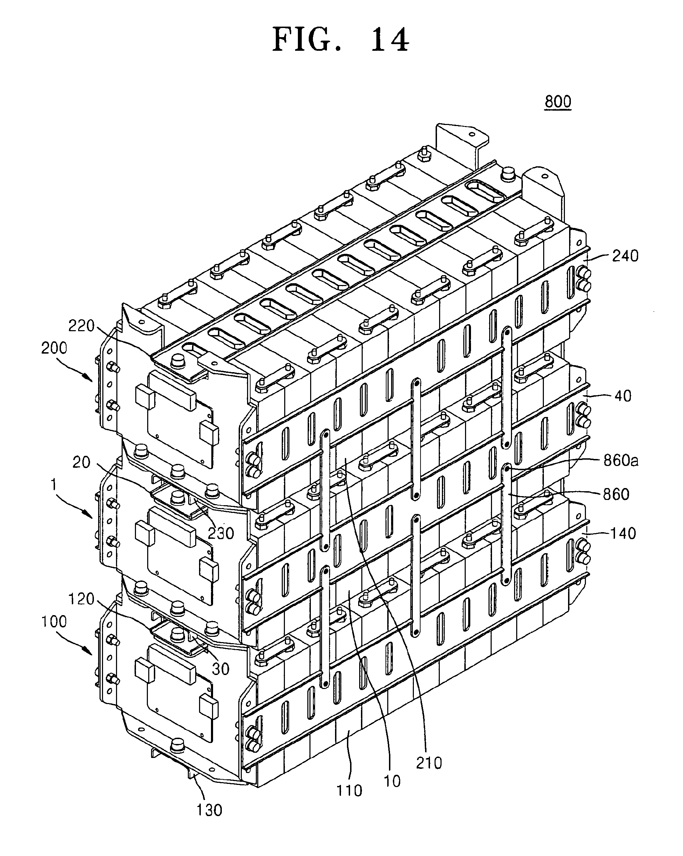

Referring to FIG. 14, in a battery pack 800, battery modules 1, 100, and 200 may be coupled by a reinforcement plate 860. The reinforcement plate 860 may cover at least a part of the battery modules 1, 100, and 200. The Reinforcement plate 860 may be welded to side plates 40 and 140 at welding points 860a.

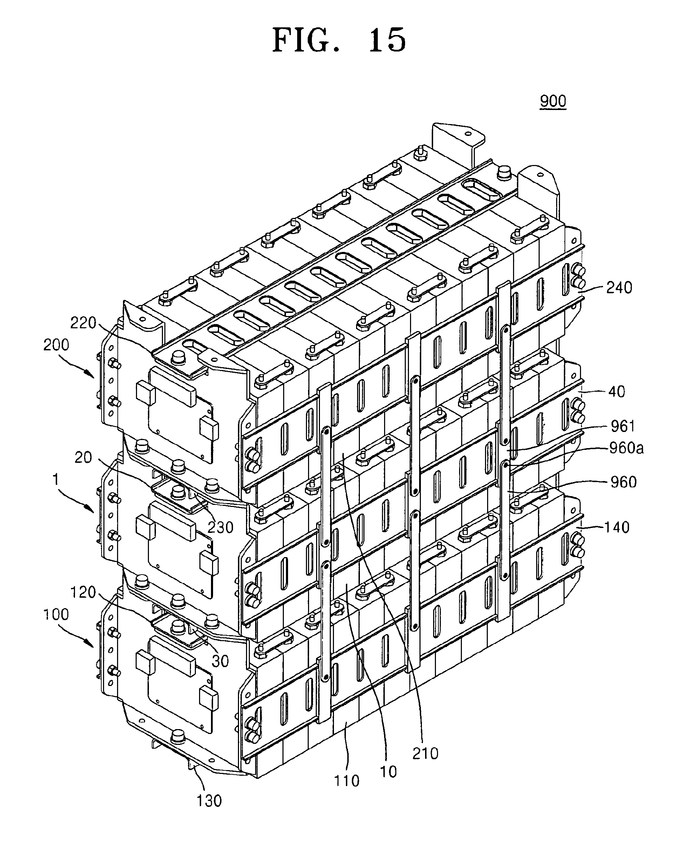

Referring to FIG. 15, in a battery pack 900, a connector 961 may be disposed between side plate 40, 140, 240 and a reinforcement plate 960. The reinforcement plate 960 may be welded on the connector 961 at welding points 960a.

According to the present invention, a battery pack is formed by vertically or laterally stacking battery modules each including a plurality of secondary batteries, thereby reducing deflection and vibration of the battery modules.

It should be understood that the exemplary embodiments described therein should be considered in a descriptive sense only and not for purposes of limitation. Descriptions of features or aspects within each embodiment should typically be considered as available for other similar features or aspects in other embodiments.

## Claims

1. A battery pack (300) comprising a plurality of stacked battery modules (1, 100, 200), wherein each battery module (1, 100, 200) is formed by arranging a plurality of secondary batteries (10) electrically connected to one another in a first direction (X), and each battery module (1, 100, 200) comprises a housing assembly (20, 30, 40, 120, 130, 140, 220, 230, 240) accommodating the plurality of secondary batteries (10), wherein at least one of the plurality of stacked battery modules (1, 100, 200) comprises at least one reinforcement plate (60, 160, 260), wherein the at least one reinforcement plate (60, 160, 260) couples the housing assembly (20, 30, 40) of a first battery module (1) to the housing assembly (120, 130, 140) of a second battery module (100),
**characterized in that**
each housing assembly (20, 30, 40, 120, 130, 140, 220, 230, 240) comprises at least one of top plate (20, 120, 220), bottom plate (30, 130, 230) and side plates (40, 140, 240), wherein the at least one plate (20, 30, 40, 120, 130, 140, 220, 230, 240) extends along the first direction (X) on a first and second side surface of the plurality of secondary batteries (10),
wherein the at least one reinforcement plate (60, 160, 260) is formed as a frame comprising four frame members, the longitudinal axes of the four frame members extending in a direction (Y, Z) which is different from the first direction (X) and wherein a first frame member of the frame is connected to the top plate (20, 120, 220), a second frame member of the frame is connected to the bottom plate (30, 130, 230) and a third frame member of the frame and a fourth frame member of the frame are connected to side plates (40, 140, 240), and
wherein each of the plurality of stacked battery modules (1, 100, 200) comprises at least one separate reinforcement plate (60, 160, 260).

2. The battery pack of claim 1, wherein the top plate (20, 120, 220) is disposed on the top surface of the plurality of secondary batteries (10) along the first direction (X), and the bottom plate (30, 130, 230) is formed below the bottom surface of the plurality of secondary batteries (110) along the first direction (X).

3. The battery pack of claim 1, wherein the longitudinal axes of the four frame members extend in a direction (Y, Z) which is perpendicular to the first direction (X).

4. The battery pack according to any one of the preceding claims, wherein each battery module (1, 100, 200) comprises a pair of end plates (50) disposed at the at least one end portion of the secondary batteries (10) of the battery module (1, 100, 200) which are electrically connected to one another.

5. The battery pack according to any one of the preceding claims, wherein a plurality of reinforcement plates (60) are separated from each other and the plurality of reinforcement plates (60) are uniformly and equidistantly arranged between the at least one end portion of the secondary batteries (10) along the first direction (X).

6. The battery pack according to claim 5, wherein each of the plurality of stacked battery modules (1, 100, 200) comprises the same number of reinforcement plates (60), wherein reinforcement plates (60, 160, 260) of different battery modules (1, 100, 200) have the same position between the respective pair of end plates (50, 150, 250) along the first direction (X).

7. The battery pack according to any one of the preceding claims, wherein adjacent reinforcement plates (60, 160, 260) are mechanically connected to each other by means of connection members (70, 170) or by means of a connection plate (C).

8. The battery pack according to any one of the preceding claims, wherein the top plate (20, 120, 220) comprises top plate bended portions (20b, 120b, 220b) formed on both longitudinal sides of the top plate (20, 120, 220) such that the top plate bended portions (20b, 120b, 220b) protrude upwards; and/or wherein the bottom plate (30, 130, 230) comprises bottom plate bended portions (30a, 130a, 230a) formed on both longitudinal sides of the bottom plate (30, 130, 230) such that the bottom plate bended portions (30a, 130a, 230a) protrude downwards; and/or wherein each of the pair of side plates (40, 140, 240) comprises side plate bended portions formed on both longitudinal sides of the side plates (40, 140, 240) such that the side plate bended portions protrude away from the secondary batteries (10).

9. The battery pack according to claim 8, wherein at least one selected from top plate bended portions (20b, 120b, 220b), bottom plate bended portions (30a, 130a, 230a) and side plate bended portions comprises at least one groove (20'g, 30'g, 40'g).

10. The battery pack according to claim 9, wherein the size of the grooves (20'g, 30'g, 40'g) along the first direction (X) corresponds to the width of reinforcement plates (60, 160, 260) so that reinforcement plates (60, 160, 260) engage into the grooves (20'g, 30'g, 40'g) such to fix the reinforcement plates (60, 160, 260) inside the respective grooves (20'g, 30'g, 40'g) and to avoid a movement of the reinforcement plates (60, 160, 260) along the first direction (X); and/or wherein the depth of the grooves (20'g, 30'g, 40'g) is equal to the thickness of the reinforcement plates (60, 160, 260).

11. The battery pack according to any one of the preceding claims, wherein at least two battery modules (1, 1001) are provided, each of the at least two battery modules (1, 1001) comprising at least one reinforcement plate (60, 1060), the reinforcement plates (60, 1060) being arranged adjacent to each other, wherein each of the at least two reinforcement plates (60, 1060) is connected to a first connection member (70) by a first connecting member (60a, 1060a) on a first side surface of the secondary batteries of the respective battery module (1, 1001) and furthermore connected to a second connection member (70) by a second connecting member (60b, 1060b) on a second side surface of the secondary batteries of the respective battery module (1, 1001), wherein the position of the first connecting member (60a, 1060a) along a second axis (Z) which extends parallel to the longitudinal axis of the third and fourth frame members of the reinforcement plate (60, 1060) is different from the position of the second connecting member (60b, 1060b) along the second axis (Z).

12. The battery pack according to any one of the preceding claims, wherein the ratio of the number of secondary batteries (10) and the number of reinforcement plates (60) is equal to or greater than 2:1.

## Patentansprüche

1. Batteriepack (300), aufweisend eine Vielzahl von geschichteten Batteriemodulen (1, 100, 200), wobei jedes Batteriemodul (1, 100, 200) durch Anordnen einer Vielzahl von Sekundärbatterien (10) ausgebildet ist, die in einer ersten Richtung (X) elektrisch miteinander verbunden sind, und wobei jedes Batteriemodul (1, 100, 200) eine Gehäuseanordnung (20, 30, 40, 120, 130, 140, 220, 230, 240) aufweist, die die Vielzahl von Sekundärbatterien (10) aufnimmt,
wobei zumindest eines aus der Vielzahl der geschichteten Batteriemodule (1, 100, 200) zumindest eine Verstärkungsplatte (60, 160, 260) aufweist, wobei die zumindest eine Verstärkungsplatte (60, 160, 260) die Gehäuseanordnung (20, 30, 40) eines ersten Batteriemoduls (1) mit der Gehäuseanordnung (120, 130, 140) eines zweiten Batteriemoduls (100) koppelt,
**dadurch gekennzeichnet, dass**
jede Gehäuseanordnung (20, 30, 40, 120, 130, 140, 220, 230, 240) zumindest eine von einer oberen Platte (20, 120, 220), einer unteren Platte (30, 130, 230) und Seitenplatten (40, 140, 240) aufweist, wobei sich die zumindest eine Platte (20, 30, 40, 120, 130, 140, 220, 230, 240) entlang der ersten Richtung (X) auf einer ersten und zweiten Seitenfläche der Vielzahl der Sekundärbatterien (10) erstreckt,
wobei die zumindest eine Verstärkungsplatte (60, 160, 260) als Rahmen ausgebildet ist, der vier Rahmenelemente aufweist, wobei sich die Längsachsen der vier Rahmenelemente in eine Richtung (Y, Z) erstrecken, die sich von der ersten Richtung (X) unterscheidet, und wobei ein erstes Rahmenelement des Rahmens mit der oberen Platte (20, 120, 220) verbunden ist, ein zweites Rahmenelement des Rahmens mit der unteren Platte (30, 130, 230) verbunden ist und ein drittes Rahmenelement des Rahmens und ein viertes Rahmenelement des Rahmens mit Seitenplatten (40, 140, 240) verbunden sind, und
wobei jedes aus der Vielzahl der geschichteten Batteriemodule (1, 100, 200) zumindest eine separate Verstärkungsplatte (60, 160, 260) aufweist.

2. Batteriepack nach Anspruch 1, wobei die obere Platte (20, 120, 220) auf der Oberseite der Vielzahl der Sekundärbatterien (10) entlang der ersten Richtung (X) angeordnet ist, und wobei die untere Platte (30, 130, 230) unter der Unterseite der Vielzahl der Sekundärbatterien (110) entlang der ersten Richtung (X) ausgebildet ist.

3. Batteriepack nach Anspruch 1, wobei sich die Längsachsen der vier Rahmenelemente in eine Richtung (Y, Z) erstrecken, die senkrecht zur ersten Richtung (X) ist.

4. Batteriepack nach einem der vorhergehenden Ansprüche, wobei jedes Batteriemodul (1, 100, 200) ein Paar Endplatten (50) aufweist, die an dem zumindest einen Endabschnitt der Sekundärbatterien (10) des Batteriemoduls (1, 100, 200) die elektrisch miteinander verbunden sind, angeordnet sind.

5. Batteriepack nach einem der vorhergehenden Ansprüche, wobei eine Vielzahl von Verstärkungsplatten (60) voneinander getrennt ist und die Vielzahl der Verstärkungsplatten (60) gleichmäßig und abstandsgleich zwischen dem zumindest einen Endabschnitt der Sekundärbatterien (10) entlang der ersten Richtung (X) angeordnet ist.

6. Batteriepack nach Anspruch 5, wobei jedes aus der Vielzahl der geschichteten Batteriemodule (1, 100, 200) die gleiche Anzahl von Verstärkungsplatten (60) aufweist, wobei Verstärkungsplatten (60, 160, 260) verschiedener Batteriemodule (1, 100, 200) die gleiche Position zwischen dem jeweiligen Paar Endplatten (50, 150, 250) entlang der ersten Richtung (X) aufweisen.

7. Batteriepack nach einem der vorhergehenden Ansprüche, wobei benachbarte Verstärkungsplatten (60, 160, 260) mittels Verbindungselementen (70, 170) oder mittels einer Verbindungsplatte (C) mechanisch miteinander verbunden sind.

8. Batteriepack nach einem der vorhergehenden Ansprüche, wobei die obere Platte (20, 120, 220) gebogene Abschnitte (20b, 120b, 220b) der oberen Platte aufweist, die derart auf beiden Längsseiten der oberen Platte (20, 120, 220) ausgebildet sind, dass die gebogenen Abschnitte (20b, 120b, 220b) der oberen Platte nach oben ragen; und/oder wobei die untere Platte (30, 130, 230) gebogene Abschnitte (30a, 130a, 230a) der unteren Platte aufweist, die derart auf beiden Längsseiten der unteren Platte (30, 130, 230) ausgebildet sind, dass die gebogenen Abschnitte (30a, 130a, 230a) der unteren Platte nach unten ragen; und/oder wobei jede aus dem Paar der Seitenplatten (40, 140, 240) gebogene Seitenplattenabschnitte aufweist, die derart auf beiden Längsseiten der Seitenplatten (40, 140, 240) ausgebildet sind, dass die gebogenen Seitenplattenabschnitte von den Sekundärbatterien (10) weg ragen.

9. Batteriepack nach Anspruch 8, wobei zumindest einer, der aus den gebogenen Abschnitten (20b, 120b, 220b) der oberen Platte, den gebogenen Abschnitten (30a, 130a, 230a) der unteren Platte und den gebogenen Seitenplattenabschnitten ausgewählt ist, zumindest eine Nut (20'g, 30'g, 40'g) aufweist.

10. Batteriepack nach Anspruch 9, wobei die Größe der Nuten (20'g, 30'g, 40'g) entlang der ersten Richtung (X) der Weite der Verstärkungsplatten (60, 160, 260) entspricht, so dass Verstärkungsplatten (60, 160, 260) derart in die Nuten (20'g, 30'g, 40'g) eingreifen, dass die Verstärkungsplatten (60, 160, 260) in den jeweiligen Nuten (20'g, 30'g, 40'g) fixiert werden und eine Bewegung der Verstärkungsplatten (60, 160, 260) entlang der ersten Richtung (X) vermieden wird; und/oder wobei die Tiefe der Nuten (20'g, 30'g, 40'g) gleich der Dicke der Verstärkungsplatten (60, 160, 260) ist.

11. Batteriepack nach einem der vorhergehenden Ansprüche, wobei zumindest zwei Batteriemodule (1, 1001) bereitgestellt werden, wobei jedes der zumindest zwei Batteriemodule (1, 1001) zumindest eine Verstärkungsplatte (60, 1060) aufweist, wobei die Verstärkungsplatten (60, 1060) zueinander benachbart angeordnet sind, wobei jede der zumindest zwei Verstärkungsplatten (60, 1060) durch ein erstes Verbindungselement (60a, 1060a) auf einer ersten Seitenfläche der Sekundärbatterien des jeweiligen Batteriemoduls (1, 1001) mit einem ersten Verbindungselement (70) verbunden ist und weiterhin durch ein zweites Verbindungselement (60b, 1060b) auf einer zweiten Seitenfläche der Sekundärbatterien des jeweiligen Batteriemoduls (1, 1001) mit einem zweiten Verbindungselement (70) verbunden ist, wobei sich die Position des ersten Verbindungselements (60a, 1060a) entlang einer zweiten Achse (Z), die sich parallel zur Längsachse des dritten und vierten Rahmenelements der Verstärkungsplatte (60, 1060) erstreckt, von der Position des zweiten Verbindungselements (60b, 1060b) entlang der zweiten Achse (Z) unterscheidet.

12. Batteriepack nach einem der vorhergehenden Ansprüche, wobei das Verhältnis der Anzahl der Sekundärbatterien (10) und der Anzahl der Verstärkungsplatten (60) gleich oder größer als 2:1 ist.

## Revendications

1. Batterie d'alimentation (300) comprenant une pluralité de modules de batteries empilés (1, 100, 200), dans laquelle chaque module de batteries (1, 100, 200) est formé en disposant une pluralité de batteries secondaires (10) connectées électriquement les unes aux autres dans une première direction (X), et chaque module de batteries (1, 100, 200) comprend un assemblage servant de boîtier (20, 30, 40, 120, 130, 140, 220, 230, 240) recevant la pluralité de batteries secondaires (10), au moins un de la pluralité de modules de batteries empilés (1, 100, 200) comprenant au moins une plaque de renforcement (60, 160, 260), ladite au moins une plaque de renforcement (60, 160, 260) couplant l'assemblage servant de boîtier (20, 30, 40) d'un premier module de batteries (1) à l'assemblage servant de boîtier (120, 130, 140) d'un second module de batteries (100),
**caractérisée en ce que** :
chaque assemblage servant de boîtier (20, 30, 40, 120, 130, 140, 220, 230, 240) comprend au moins une des plaques consistant en une plaque supérieure (20, 120, 200), une plaque inférieure (30, 130, 230) et des plaques latérales (40, 140, 240), ladite au moins une plaque (20, 30, 40, 120, 130, 140, 220, 230, 240) s'étendant le long de la première direction (X) sur des première et seconde surfaces latérales de la pluralité de batteries secondaires (10),
dans laquelle ladite au moins une plaque de renforcement (60, 160, 260) est formée à l'état de cadre comprenant quatre éléments de cadre, les axes longitudinaux des quatre éléments de cadre s'étendant dans une direction (Y, Z) qui est différente de la première direction (X), et dans laquelle un premier élément de cadre du cadre est connecté à la plaque supérieure (20, 120, 220), un deuxième élément de cadre du cadre est connecté à la plaque inférieure (30, 130, 230) et un troisième élément de cadre du cadre et un quatrième élément de cadre du cadre sont connectés aux plaques latérales (40, 140, 240), et
dans laquelle chacun de la pluralité de modules de batteries empilés (1, 100, 200) comprend au moins une plaque de renforcement distincte (60, 160, 260).

2. Batterie d'alimentation suivant la revendication 1, dans laquelle la plaque supérieure (20, 120, 220) est disposée sur la surface supérieure de la pluralité de batteries secondaires (10) le long de la première direction (X), et la plaque inférieure (30, 130, 230) est formée au-dessous de la surface inférieure de la pluralité de batteries secondaires (110) le long de la première direction (X).

3. Batterie d'alimentation suivant la revendication 1, dans laquelle les axes longitudinaux des quatre éléments de cadre s'étendent dans une direction (Y, Z) qui est perpendiculaire à la première direction (X).

4. Batterie d'alimentation suivant l'une quelconque des revendications précédentes, dans laquelle chaque module de batteries (1, 100, 200) comprend une paire de plaques terminales (50) disposée au niveau de ladite au moins une portion terminale des batteries secondaires (10) du module de batteries (1, 100, 200) qui sont connectées électriquement les unes aux autres.

5. Batterie d'alimentation suivant l'une quelconque des revendications précédentes, dans laquelle les plaques de la pluralité de plaques de renforcement (60) sont séparées les unes des autres et les plaques de la pluralité de plaques de renforcement (60) sont disposées de manière uniforme et équidistante entre ladite au moins une portion terminale des batteries secondaires (10) le long de la première direction (X).

6. Batterie d'alimentation suivant la revendication 5, dans laquelle chacun de la pluralité de modules de batteries empilés (1, 100, 200) comprend le même nombre de plaques de renforcement (60), les plaques de renforcement (60, 160, 260) des différents modules de batteries (1, 100, 200) ayant la même position entre la paire respective des plaques terminales (50, 150, 250) le long de la première direction (X).

7. Batterie d'alimentation suivant l'une quelconque des revendications précédentes, dans laquelle les plaques de renforcement adjacentes (60, 160, 260) sont connectées mécaniquement les unes aux autres au moyen d'éléments de connexion (70, 170) ou au moyen d'une plaque de connexion (C).

8. Batterie d'alimentation suivant l'une quelconque des revendications précédentes, dans laquelle la plaque supérieure (20, 120, 220) comprend des portions fléchies de plaque supérieure (20b, 120b, 220b) formées sur les deux côtés longitudinaux de la plaque supérieure (20, 120, 220) de telle sorte que les portions fléchies de plaque supérieure (20b, 120b, 220b) fassent saillie vers le haut ; et/ou dans laquelle la plaque inférieure (30, 130, 230) comprend des portions fléchies de plaque inférieure (30a, 130a, 230a) formées sur les deux côtés longitudinaux de la plaque inférieure (30, 130, 230) de telle sorte que les portions fléchies de plaque inférieure (30a, 130a, 230a) fassent saillie vers le bas ; et/ou dans laquelle chacune de la paire de plaques latérales (40, 140, 240) comprend des portions fléchies de plaque latérale formées des deux côtés longitudinaux de plaque latérale (40, 140, 240) de telle sorte que les portions fléchies de plaque latérale fassent saillie par rapport aux batteries secondaires (10).

9. Batterie d'alimentation suivant la revendication 8, dans laquelle au moins un élément choisi entre les portions fléchies de plaque supérieure (20b, 120b, 220b), les portions fléchies de plaque inférieure (30a, 130a, 230a) et les portions fléchies de plaque latérale comprend au moins une rainure (20'g, 30'g, 40'g).

10. Batterie d'alimentation suivant la revendication 9, dans laquelle la dimension des rainures (20'g, 30'g, 40'g) le long de la première direction (X) correspond à la largeur des plaques de renforcement (60, 160, 260) de telle sorte que les plaques de renforcement (60, 160, 260) s'engagent dans les rainures (20'g, 30'g, 40'g) de manière à fixer les plaques de renforcement (60, 160, 260) à l'intérieur des rainures respectives (20'g, 30'g, 40'g) et pour éviter un mouvement des plaques de renforcement (60, 160, 260) le long de la première direction (X) ; et/ou dans laquelle la profondeur des rainures (20'g, 30'g, 40'g) est égale à l'épaisseur des plaques de renforcement (60, 160, 260).

11. Batterie d'alimentation suivant l'une quelconque des revendications précédentes, dans laquelle au moins deux modules de batteries (1, 1001) sont fournis, chacun desdits au moins deux modules de batteries (1, 1001) comprenant au moins une plaque de renforcement (50, 1060), les plaques de renforcement (60, 1060) étant disposées en positions adjacentes l'une à l'autre, chacune desdites au moins deux plaques de renforcement (60, 1060) étant connectée à un premier élément de connexion (70) par un premier élément de jonction (60a, 1060a) sur une première surface latérale des batteries secondaires du module de batterie respectif (1, 1001) et connectée en outre à un second élément de connexion (70) par un second élément de jonction (60b, 1060b) sur une seconde surface latérale des batteries secondaires du module de batteries respectif (1, 1001), dans laquelle la position du premier élément de jonction (60a, 1060a) le long d'un second axe (Z) qui s'étend parallèlement à l'axe longitudinal des troisième et quatrième éléments de cadre de la plaque de renforcement (60, 1060) est différente de la position du second élément de jonction (60b, 1060b) le long du second axe (Z).

12. Batterie d'alimentation suivant l'une quelconque des revendications précédentes, dans laquelle le rapport du nombre de batteries secondaires (10) et du nombre de plaque de renforcement (60) est égal ou supérieur à 2:1.
